# EUROPÄISCHE PATENTSCHRIFT

(11) **EP 3 522 482 B1**
(45) Veröffentlichungstag und Bekanntmachung des Hinweises auf die Patenterteilung: **26.08.2020**
(21) Anmeldenummer: 18184095.0
(22) Anmeldetag: 18.07.2018
(51) Int. Cl.: G05B 19/418, H04L 29/06, H04L 29/08

(54) **VERFAHREN ZUR DATEN-KOMMUNIKATION IN EINEM INDUSTRIELLEN NETZWERK, STEUERUNGSVERFAHREN, VORRICHTUNG, COMPUTERPROGRAMM SOWIE COMPUTERLESBARES MEDIUM**
METHOD FOR COMMUNICATING DATA IN AN INDUSTRIAL NETWORK , CONTROL METHOD, DEVICE, COMPUTER PROGRAM AND COMPUTER-READABLE MEDIUM
PROCÉDÉ DE COMMUNICATION DE DONNÉES DANS UN RÉSEAU INDUSTRIEL, PROCÉDÉ DE COMMANDE, DISPOSITIF, PROGRAMME INFORMATIQUE ET SUPPORT LISIBLE PAR ORDINATEUR

(30) Priorität: 31.01.2018 EP 18154319
(43) Veröffentlichungstag der Anmeldung: 07.08.2019
(73) Patentinhaber: Siemens Aktiengesellschaft, 80333 München (DE)
(72) Erfinder: Kießling, Marcel, 91235 Velden (DE)

(56) Entgegenhaltungen:
- US-A1- 2013 070 788
- US-A1- 2017 331 719

## Beschreibung

Die Erfindung ist definiert durch ein Verfahren zur Datenkommunikation in einem Netzwerk gemäß Anspruch 1, einer Vorrichtung gemäß Anspruch 16 , einem Computerprogramm gemäß Anspruch 17 sowie einem computerlesbaren Medium gemäß Anspruch 18. Weitere Ausführungen sind in den abhängigen Ansprüchen beschrieben.

In der industriellen Automatisierung kommen zur automatisierten Steuerung bzw. Regelung beispielsweise von Maschinen, Anlagen bzw. industriellen Prozessen spezielle Steuersysteme, insbesondere sogenannten speicherprogrammierbaren Steuerungen, abkürzt SPS (englisch: Programmable Logic Controller, PLC) zum Einsatz. Eine SPS ist in der Regel über eine Mehrzahl von Eingangswerte liefernden Sensoren und eine Mehrzahl von Steuerwerten empfangenden Aktoren an die Maschine, Anlage bzw. einen Prozess angebunden.

Rein beispielhaft seien für Sensoren Druck- und Temperaturaufnehmer, Inkrementalgeber sowie Füllstandssensoren genannt. Aktoren können beispielsweise in Form von Schaltschützen, elektrischen Ventile und Module für Antriebssteuerungen gegeben sein. Die Sensoren und Aktoren sind nahe an dem bzw. den zu automatisierenden Prozess(en) angeordnet, um die benötigten Messwerte an den relevanten Stellen zu erfassen bzw. an erforderlichen Stellen auf den Prozess einwirken zu können. Die Position der Aktoren ist auch durch den Aufbau der Maschine bzw. Anlage festgelegt.

Im Betrieb erhält das Steuersystem von den Sensoren mittels dieser erfasste Messwerte, berechnet (u.a.) auf deren Basis Steuerwerte für die Aktoren und sendet diese an die Aktoren. Um nicht für jeden Sensor und/oder Aktor ein eigenes Kabel zum Steuersystem legen zu müssen, sind Kommunikationsnetzwerke, sogenannte Feldbusse, entwickelt worden.

Feldbusse für industrielle Anwendungen betreffende Normen sind beispielsweise IEC 61158, IEC 61784-1 bis IEC 61784-5.

Angefangen hat dies mit einfachen Bus-Systemen. Ein einfaches Bus-System zeichnet sich in der Regel dadurch aus, dass die an ihn angeschlossenen einzelnen Geräte über eine Sammelleitung miteinander verbunden sind. Dabei ist typischerweise von dem Steuersystem, insbesondere der SPS, ein Bus-Netzwerk zu allen Sensoren und Aktoren, die Feldgeräte darstellen, verlegt worden. Über einen Feldbus können auch weitere Geräte, beispielsweise Bedien- und/oder Anzeigeeinrichtungen mit dem Steuersystem verbunden sein, um Daten von oder für diese zu übertragen. Als Beispiel für ein solches physisches Bus-System sei PROFIBUS genannt.

Heutzutage basieren viele Feldbusse auf Ethernet (zu Ethernet siehe IEEE 802, insbesondere IEEE 802.3), wie es beispielsweise bei PROFINET RT der Fall ist. Gegebenenfalls sind proprietäre Erweiterungen vorgesehen, um eine gewünschte Performance/Qualität in der Übertragung zu erreichen. Das gesamte logische Grundkonzept mit einem Bus zwischen Steuerung und Sensoren/Aktoren ist jedoch im Engineering erhalten geblieben. Das in Form des Feldbusses gegebene, auf Ethernet basierende Kommunikationsnetzwerk wird weiterhin wie ein einziges logisches Kabel (Bus Netzwerk) betrachtet. Die verfügbare Bandbreite (in der Regel 100 Mbit/s) wird zumeist fest auf eine Hälfte (in der Regel 50 Mbit/S) für Echtzeit-Daten und eine weitere Hälfte (in der Regel 50 Mbit/s) für anderen Verkehr aufgeteilt. Die Einhaltung der Bandbreite muss dann durch die Auslegung der Echtzeit-Anwendung sichergestellt werden. Netzwerkgeräte erkennen die Echtzeitdaten anhand von proprietären Erweiterungen oder durch die Verwendung von speziellen Adressen und ordnen diese den entsprechenden Ressourcen zu.

Die bisherigen Feldbusse lassen sich so nicht problemlos in neue, standardisierte Ethernet-Netzwerke integrieren. Vor allem durch die bekannten AVB- und TSN-Erweiterungen wären die Netzwerke jedoch leistungsfähig genug, um die Anforderungen, insbesondere an eine Echtzeit-Datenübertragung, zu erfüllen.

Insbesondere die Verwendung von mehreren Feldbussen in einem Ethernet-Netzwerk stellt sich problematisch dar.

Industrielle Feldbusse (beispielsweise PROFINET) sind bisher für 100 Mbit/s Ethernet Netzwerke ausgelegt. Der Anmelderin ist bekannt, dass bei der Projektierung eine Bus-Topologie für das gesamte Ethernet-Netzwerk angenommen wird. Es wird ferner bei der Auslegung angenommen, dass alle Ressourcen im Netzwerk exklusiv genutzt werden können. Für den Fall, dass eine dieser Annahmen nicht zutrifft, muss per Hand eine Ressourcen-Planung durchgeführt werden, was mit nicht unerheblichem Aufwand verbunden ist und umfangreicher Erfahrung bedarf. Bisher gibt es nach Kenntnis der Anmelderin keinen Mechanismus, der die Planung mit der Wirklichkeit vergleicht und die geplanten Grenzen kontrolliert und bei einer Verletzung reagiert. Dadurch kann das gesamte Netzwerk ausfallen. Ein Schutz während des Betriebs ist nicht möglich, da die Ressourcen-Planung im Netzwerk nicht bekannt ist.

Durch die Weiterentwicklung von Ethernet stehen immer höhere Bandbreiten zur Verfügung. Die Feldbusse sind jedoch typischerweise nur für 100 Mbit/s-Netzwerke ausgelegt. Durch die höheren Bandbreiten entsteht der Wunsch, mehrere Feldbus-Systeme in einem Ethernet-Netzwerk zu verwenden. Einen Schutz eines logischen Feldbusses gibt es ohne Anpassung der einzelnen Systeme jedoch nicht. Alle Echtzeit-Anwendungen teilen sich die Ressourcen gleichberechtigt.

Im Rahmen der IEEE-Standardisierung wurde in der Arbeitsgruppe AVB (Audio-Video-Bridging) die Technologie Ethernet (s. IEEE 802) um Mechanismen zur Erreichung von garantierter QoS ("Quality of Service" - auch als Dienstgüte bezeichnet) erweitert. Dabei wurde eine neue Art von Verkehr definiert, die sogenannten Streams, über welche die Qualität (QoS) in einem Netzwerk garantiert werden kann. Ein Stream gemäß diesen Standards stellt eine geschützte, unidirektionale Kommunikationsverbindung von einem auch als Talker bezeichneten, eine Datenquelle bildenden Gerät zu einem oder mehreren auch als Listener bezeichneten, die Datensenken, also Empfänger darstellenden Gerät(e) dar.

Time Sensitive Networking (TSN) bezeichnet eine Reihe von Standards, die den Bridging Standard IEEE 802.1Q um Mechanismen zur Übertragung echtzeitkritischer Daten über Ethernet-Netze erweitert. Zu den genannten Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere Standards.

Vor der eigentlichen Datenübertragung via Stream erfolgt eine Registrierung und Reservierung, um von dem Netzwerk Garantien für einen verlustfreien Echt-Zeit-Transfer von Datenframes und eine pünktliche Lieferung zu erhalten. Für einen Stream wird eine Reservierung insbesondere durch ein sogenanntes Stream-Reservation-Protokoll (SRP) durchgeführt. Jeder Stream hat eine eigene Adresse, um die Weiterleitung zu kontrollieren.

"Multiple Listeners per Stream" wurde in AVB eingeführt, um die Anzahl von Echtzeit-Datenflüssen von einer Quelle (Talker) zu mehreren Zielen (Listenern) zu reduzieren. Konkret wird die Datenübertragung von einem Talker an mehrere Listener über nur einen Stream ermöglicht. In der auf die Anmelderin zurückgehenden europäischen Patentanmeldung mit dem Aktenzeichen EP 18 15 4319 ist ferner ein Stream-Reservierungs-Modell offenbart, welches "Multiple Talker per Listener" ermöglicht, konkret die Übertragung von Daten von mehreren Talkern an einen Listener über nur einen Stream.

Aus US 2013/070788 A1 ist ein Verfahren zum Austausch von Daten zwischen zwei Geräten eines Netzwerkes bekannt, welches sich zum Austausch der Daten eines Kommunikationsprotokolls mit einer Schnittstelle nach dem OPC-UA Standard bedient. Dabei umfasst das Kommunikationsprotokoll eine Schnittstelle nach dem Stream Reservation Protocol (SRP) Standard oder Multiple Stream Registration Protocol (MSRP) Standard gemäß IEEE 802.1Qat, so dass die Daten zwischen den zwei Geräten über beide Schnittstellen in einer vorgegebenen Zeitspanne austauschbar sind.

US2017331719A1 betrifft ein Verfahren zum Konfigurieren eines Kommunikationspfads, welches in einem ersten Kommunikationsknoten eines Fahrzeugnetzwerks durchgeführt wird. Das Verfahren umfasst ein Empfangen eines ersten Rahmens, welcher anfordert, einen Kommunikationspfad, durch welchen ein Datenstrom übertragen wird, zu konfigurieren. Außerdem umfasst das Verfahren ein Konfigurieren eines Verzeichnisses des ersten Kommunikationsknotens basierend auf einer in dem ersten Rahmen vorliegenden Information, wenn ein zweiter Rahmen, der einen Datenstrom-Identifikator, der identisch mit einem Datenstrom-Identifikator des ersten Rahmens ist, aufweist, nicht empfangen wird. Darüber hinaus umfasst das Verfahren ein Erhöhen einer Hop-Zahl des ersten Rahmens sowie ein Übertragen des ersten Rahmens, welcher die erhöhte Hop-Zahl aufweist.

Aufgabe der vorliegenden Erfindung ist es, ein Verfahren zur Datenkommunikation insbesondere zwischen Komponenten bzw. Geräten einer industrielle Automatisierungsanwendung anzugeben, welches eine zuverlässige Echtzeit-Kommunikation ermöglicht, sich gleichzeitig mit vertretbarem Aufwand durchführen lässt und dabei insbesondere auch die weitere Verwendung von bestehenden Konzepten der Feldbus-Technologie ermöglicht.

Diese Aufgabe wird gelöst durch ein Verfahren zur Daten-Kommunikation in einem insbesondere industriellen Netzwerk, bei dem Daten zwischen wenigstens zwei Geräten, von denen wenigstens ein Gerät an einem Feldbus liegt, übertragen werden, wobei die Datenübertragung zumindest abschnittsweise über ein AVB- oder TSN-Netzwerk erfolgt, in dem für den Feldbus wenigstens ein Stream eingerichtet ist bzw. wird, wobei für den wenigstens einen Stream an einem oder mehreren Knotenpunkten, insbesondere Switches und/oder Bridges, des Netzwerks Ressourcen reserviert sind und/oder werden, und Datenframes, die von wenigstens einem an dem Feldbus liegenden Gerät stammen und/oder für wenigstens ein an dem Feldbus liegendes Gerät bestimmt sind, über den wenigstens einen Stream übertragen werden.

Erfindungsgemäß ist ferner vorgesehen, dass der oder jeder Feldbus über wenigstens einen Verbindungsknotenpunkt an das AVB- oder TSN-Netzwerk angebunden ist, wobei der wenigstens eine Verbindungsknotenpunkt einen Feldbus-Port in Richtung des jeweiligen Feldbusses und einen Stream-Port in Richtung des AVB- oder TSN-Netzwerkes aufweist, und der wenigstens eine Verbindungsknotenpunkt ausgebildet und eingerichtet ist, um Datenframes, die an dem Feldbus-Port ankommen, wenigstens einen Stream-Parameter, insbesondere eine designierte Stream Adresse und/oder eine VLAN ID und/oder eine Priorität zuzuweisen, insbesondere voranzustellen, und/oder um aus Datenframes, die an dem Stream-Port ankommen, wenigstens einen Stream-Parameter, insbesondere eine designierte Stream Adresse und/oder eine VLAN ID und/oder eine Priorität zu entfernen.

Bei den wenigstens zwei Geräten handelt es sich bevorzugt um Geräte/Komponenten einer industriellen Automatisierungsanwendung, beispielsweise um Feldgeräte und/oder Steuergeräte, wobei ein Steuergerät insbesondere in Form einer speichergrogrammierbaren Steuerung (SPS) (engl.: Programmable Logic Controller, PLC) vorliegen kann. Feldgeräte können beispielsweise in Form von IO-Geräten gegeben sein, die einen oder mehrere Sensoren und/oder Aktoren umfassen, oder diesem bzw. diesen zugeordnet bzw. mit diesem oder diesen verbunden sind. Der Erfindung liegt mit anderen Worten die Idee zugrunde, die neuen standardisierten Ethernet-Mechanismen zur Abbildung eines oder mehrerer logischer Feldbusse - insbesondere als ganzes System - auf eine Kommunikationsstrecke in einem Ethernet-Netzwerk zu nutzen. Dadurch wird es insbesondere möglich, bestehende Konzepte der Feldbus-Technologie weiterhin zu verwenden. Bestandsgeräte können weiter genutzt werden, dies zusammen mit den neuen Standards, insbesondere AVB bzw. dessen Erweiterung TSN. Dabei werden bevorzugt nicht alle Bestandsgeräte, etwa Sensoren und/oder Aktoren, einzeln an das AVB- oder TSN-Netzwerk angeschlossen, sondern es verbleiben insbesondere mehrere Geräte an einem bestehenden Feldbus bzw. an einem Teil/Segment eines bestehenden Feldbusses, und werden mit einem oder mehreren weiteren Feldbus-Geräten, die an wenigstens einem weiteren Feldbus-Teil bzw. -Segment liegen, über das AVB- oder TSN-Netzwerk und via Stream(s) verbunden.

Bei dem Feldbus oder - sofern mehrere vorhanden - den Feldbussen kann es sich um physische Feldbusse (beispielsweise PROFIBUS) und/oder auf einem Ethernet-Netzwerk ohne AVB- oder TSN-Erweiterung basierende logische Feldbusse (beispielsweise PROFINET) handeln.

Innerhalb des jeweiligen Feldbusses bzw. Teils/Segments des Feldbusses können die Geräte bzw. Komponenten weiterhin nach dem bestehenden, zu dem Feldbus gehörigen Standard kommunizieren. Im Falle eines PROFINET-Feldbusses werden etwa innerhalb des Feldbusses weiterhin Ethernet-Datenframes (gemäß IEEE 802, insbesondere IEEE802.3) ohne AVB- oder TSN- Erweiterung also nicht über einen Stream gesendet. Zu physikalischen Feldbussen, etwa PROFIBUS, gehören andere Codierungen für die Datenframes, die ebenfalls weiterhin innerhalb des (jeweiligen) Feldbusses bzw. (jeweiligen) Feldbussegmentes verwendet werden können. Die Feldbus-Geräte müssen daher nicht für das AVB- oder TSN-Netzwerk, welches den neuen Standards genügt, verändert werden.

In dem AVB- der TSN-Netzwerke wird erfindungsgemäß wenigstens ein Stream, das heißt eine geschützte Verbindung mit gesicherten, reservierten Ressourcen und insbesondere einer definierten Latenz, eingerichtet. Bei dem AVB- oder TSN-Netzwerk handelt es sich entsprechend um ein solches, welches die Einrichtung von Streams durch Ressourcen-Reservierung unterstützt.

Sämtliche für das Einrichten des bzw. der Streams benötigten Parameter sind in der Regel ohnehin im Engineering eines Feldbusses vorhanden, insbesondere in dem TIA Portal, und können auf einfache Weise verwendet werden. Als Beispiele für diese Parameter seien die Paketgröße, Paketanzahl, die Bandbreite, der update-Cycle, das Sendeintervall und die Latenz genannt.

Insbesondere ist der (jeweilige) logische Feldbus bereits in den Engineering-Programmen zur Konfiguration der Teilnehmer enthalten. Bei PROFINET beispielsweise kann dies im TIA-Portal erfolgen. Durch die logische Verschaltung von projektierten Baugruppen im Hardware-Konfigurator entsteht ein logischer Feldbus. Zur Konfiguration von allgemeinen Netzwerkparametern hat das logische Bussystem meist einen Namen und zur internen Verwendung eine eindeutige ID (Beispielsweise einen UUID - Universally Unique Identifier). Falls notwendig, kann z.B. die Datenrate des physikalischen Busses oder des unterliegenden Ethernet-Netzwerkes (ohne AVB- oder TSN-Erweiterung), welches den logischen Bus abbildet, eingestellt werden. Über den Namen bzw. die eindeutige ID können Datenframes des jeweiligen Feldbusses einem oder mehreren Streams zugeordnet werden. Die Adaption bzw. Einrichtung des als "Tunnel" verwendeten Streams im AVB- oder TSN-Ethernet-Netzwerk ist dadurch möglich, was sich die vorliegende Erfindung zu Nutze macht. Über einen Feldbus-Namen und/oder eine zugehörige eindeutige ID sind auch zusammengehörende Feldbussegmente bzw. Feldbusgeräte identifizierbar.

Insbesondere durch den Einsatz von Preemption (IEEE 802.1Qbu) in einem TSN-Netzwerk kann beispielsweise auch die Latenzanforderung von sehr zeitkritischen Anwendungen in den Feldbussen eingehalten werden. Bei 100 MBit/s beispielsweise würde die benötigte Zeit zum Senden eines Frames mit der maximalen Datenmenge ca. 125 Mikrosekunden dauern, was bereits größer als ein kleiner Bus-Zyklus von 64 Mikrosekunden ist.

Die AVB- und die TSN-Technologie ist vor allem durch den bereits erfolgten Einsatz im Automobilbereich und/oder die Herkunft von AVB (Audio Video Bridging) aus Heimnetzwerken in vergleichsweise preiswerten Netzwerkkomponenten verfügbar. Durch die erfindungsgemäße Nutzung vergleichsweise kostengünstiger und standardisierter AVB- bzw. TSN-Mechanismen (Streams) kann auf andere Mechanismen zum Tunneln einer Datenübertragung in Ethernet-Netzwerken, wie etwa VXLAN, Macin-Mac, SPB-V, die bisher nur in teureren Hardwarekomponenten vorhanden sind, und zudem keinen Ressourcenschutz bieten, verzichtet werden.

Die erfindungsgemäße Nutzung eines oder mehrerer Streams führt zu einer robusten, garantierten Übertragung mit gesicherten Ressourcen und garantiert die Einhaltung von einer geforderten Latenz für Echtzeit-Anwendungen. Die zu übertragenden Daten sind durch die Reservierung vor einer zu großen Einwirkung von anderen Echtzeitanwendungen und/oder sonstigen Anwendungen im Netzwerk geschützt. Andere Anwendungen haben dann insbesondere nur eine kleine, aber genau bekannte Auswirkung auf die Übertragungszeit. Durch die Ressourcenreservierung kommt es nicht zum Verlust von Echtzeitdaten.

Um Ethernet-Geräte, welche in einem Feldbus liegen, also in einen Feldbus integriert sind, transparent anbinden zu können, kann die Paketauswahl auf die zu dem (jeweiligen) Feldbus gehörende Pakete begrenzt werden. Diese Erkennung kann beispielsweise unter Rückgriff auf den Ethertype erfolgen. Der Ethertype ist dabei ein definierter Bestandteil eines Ethernet-Datenframes und definiert das Protokoll, welches die Daten sendet und am Zielort nach dem Empfang verarbeitet. Bei PROFINET RT beispielsweise ist der Ethertype 0x8892.

Für den oder jeden Feldbus wird der wenigstens eine Stream bevorzugt automatisiert eingerichtet.

Für den Erhalt einer oder mehrere geschützter Verbindungen, also eines oder mehrerer Streams werden in an sich bekannter Weise vor der eigentlichen Übertragung der Daten Ressourcen in einem oder mehreren Knotenpunkten des Netzwerkes reserviert, was bevorzugt unter Verwendung eines Reservierungsprotokolls erfolgt. Durch die Verwendung eines Reservierungsprotokolls für den Echtzeit-Fluss kann die komplexe Konfiguration automatisch im Netzwerk durchgeführt werden, wobei die jeweils vorliegende Topologie genutzt wird.

Bei Ressourcen, die reserviert sind und/oder werden, kann es sich beispielsweise um Adresstabelleneinträge, Framebuffer, transmit time slices, Bandbreite, Jitter, Latenz etc. handeln.

In bevorzugter Ausgestaltung ist vorgesehen, dass als Ressourcen für den wenigstens einen Stream Adresstabelleneinträge und/oder Framebuffer und/oder Bandbreite an einem oder mehreren Knotenpunkten des Netzwerkes reserviert sind und/oder werden. Besonders bevorzugt sind und/oder werden an wenigstens einem Knotenpunkten zumindest ein Adresstabelleneintrag und Framebuffer und Bandbreite reserviert.

Die Zuordnung von Datenframes zu einem Tunnel bzw. Stream kann in den Endpunkten anhand des Protokolls erfolgen. Bei PROFINET beispielsweise kann auch zusätzlich die Frame ID, also ID innerhalb der Ethernet-Datenframes verwendet werden. Dadurch wird es möglich, dass für jeden Service eines Feldbusses, insbesondere PROFINET-Service, ein eigener Tunnel, also Stream ausgewählt wird.

Insbesondere unter Verwendung eines Reservierungsprotokolls und/oder Rückgriff auf Parameter aus einem vorhandenen Feldbus-Engineering, insbesondere TIA-Portal, kann eine automatische Konfiguration des bzw. der Streams auf einfache Weise erfolgen, was die Handhabung erleichtert und den Einsatz durch Anwender auch ohne spezielles IT Wissen ermöglicht.

Im Rahmen des erfindungsgemäßen Verfahrens kann einer oder können mehrere Streams der Datenübertragung zwischen zwei oder mehreren Geräten innerhalb eines Feldbusses dienen und/oder der Datenübertragung zwischen Geräten, die an zwei oder mehr verschiedenen Feldbussen liegen, also zwischen zwei oder mehr Feldbussen, und/oder der Datenübertragung zwischen Geräten, von denen wenigstens eines an einem Feldbus liegt und wenigstens eines nicht an einem Feldbus liegt.

Ener oder mehrere Streams werden in einem AVB- bzw. TSN-Netzwerk eingerichtet. Unter einem AVB- bzw. TSN-Netzwerk ist dabei ein solches zu verstehen, welches einem oder mehreren Audio Video Bridging (AVB) oder Time Sensitive Networking (TSN) Standards genügt, insbesondere einen oder mehrere AVB- bzw. TSN-fähige Knotenpunkte, etwa Switches und/oder Bridges umfasst. Das Netzwerk bzw. die Knotenpunkte sind insbesondere ausgebildet und/oder eingerichtet, um einem oder mehreren AVB- bzw. TSN-Standards zu genügen. Zu den AVB-Standards gehören insbesondere IEEE802.1AS, IEEE802.1Qat, IEEE802.1Qav, IEEE802.1BA und zu den TSN-Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere Standards.

Die erfindungsgemäße Vorgehensweise bietet mehrere Vorteile. Einerseits können Feldbusse als logische Feldbusse weiterhin existieren. Der Anwender kann wie bisher die Kommunikation als Bus betrachten und die Geräte logisch miteinander verbinden.

Die Übertragung im AVB- oder TSN-Ethernet-Netzwerk ist über den Stream bzw. Streams geschützt und kann von anderen Anwendungen nicht mehr gestört werden. Darüber hinaus ist eine Änderung der Endgeräte nicht erforderlich. Vielmehr können bestehende Endgeräte bzw. Systeme, insbesondere einer industriellen Automatisierungsanwendung, weiterhin problemlos genutzt werden. Gleichzeitig kann auf die neuen, standardisierten Ethernet-Mechanismen AVB- bzw. TSN zurückgegriffen werden. Der Feldbus bzw. die Feldbusse werden darüber hinaus durch die erfindungsgemäße Vorgehensweise als Verbindung im AVB- oder TSN-Netzwerk sichtbar, durch die Reservierung von wenigstens einem Stream, was es auch möglich macht, Fehler und Ressourcen-Engpässe im AVB- oder TSN-Netzwerk auf sehr einfache Weise zu diagnostizieren. Insbesondere wird in der Diagnose des AVB- bzw. TSN-Netzwerkes der logische Feldbus, bzw. werden die logischen Feldbusse in Form wenigstens eines Streams, bevorzug in Form von genau zwei Streams für eine bidirektionale Kommunikation, sichtbar. Jeder Stream, insbesondere jede Übertragungsrichtung der getunnelten Kommunikation (logischer Bus) ist dann im Netzwerk-Management mit den belegten Ressourcen erkennbar. Beispielsweise können Bridges mit einer nicht ausreichenden Anzahl von FDB Einträgen so im AVB-bzw. TSN-Netzwerk erkannt werden. Diese Diagnose für Streams ist Bestandteil des Reservierungsprotokolls SRP (in IEE 802.1 Q).

Die Übertragung von Datenframes über den wenigstens einen Stream ist insbesondere derart, dass durch einen Shaper, insbesondere gemäß IEEE802.1, die Einhaltung der Bandbreite garantiert wird. Durch die garantierte Bandbreiteneinhaltung kann auf dem Weg in jedem Knotenpunkt, etwa jeder Bridge eine maximale Latenz garantiert werden. Durch den Credit Based Shaper (CBS) gemäß IEEE 802.1Qav wird bei einem AVB- oder TSN-Stream beispielsweise bei der Übertragung bzw. Weiterleitung jedes Datenframes eine Pause gemacht, deren Länge von der Größe des Datenframes und der reservierten Bandbreite abhängt. Dabei gilt, dass die Pause umso länger ist, je größer der vor der Pause übertragene bzw. weitergeleitete Datenframe war, also umso größer die weitergeleitete bzw. übertragene Datenmenge war. Der Zusammenhang ist dabei insbesondere linear. Die Länge der Pause entspricht insbesondere der Länge der für die Übertragung des jeweiligen Datenframes erforderlichen Zeit multipliziert mit einem von der reservierten Bandbreite abhängigen Faktor. Sind beispielsweise 25 % der Bandbreite für einen Stream reserviert, wird insbesondere nach jedem Datenframe eine Pause gemacht, die dreimal so lang ist, wie die für dessen Übertragung erforderliche Zeit. Sind 50% reserviert, ist die Pause so lang, wie die Übertragungszeit und so weiter. Der Faktor für die Länge der Pause ist aufgrund der Reservierung bekannt und wird fest eingerichtet. Über diese Vorgehensweise wird garantiert, dass die Bandbreite eingehalten wird. Frames, die an einem Knotenpunkt, insbesondere einer Bridge bzw. einem Switch des AVB- bzw. TSN-Netzwerkes ankommen, können immer sofort weitergeleitet werden.

Besonders bevorzugt ist vorgesehen, dass wenigstens ein Stream zwischen zwei Segmenten eines Feldbusses, eingerichtet ist bzw. wird, wobei bevorzugt an zumindest einem Feldbussegment mehrere Geräte liegen. Im einfachsten Falle kann ein Feldbussegment auch ein einzelnes Gerät umfassen bzw. durch ein solches gegeben sein. Das bedeutet, es können beispielsweise auch Daten via Stream zwischen einem Feldbussegment, an welchem zwei oder mehr Geräte anliegen, und einem einzelnen Feldbus-Gerät ausgetauscht werden.

Eine weitere bevorzugte Ausführungsform des erfindungsgemäßen Verfahrens zeichnet sich dadurch aus, dass zwei oder mehr Feldbusse, an denen jeweils wenigstens ein Gerät liegt, vorgesehen sind, und für jeden Feldbus wenigstens ein dem jeweiligen Feldbus zugeordneter Stream in dem AVB- oder TSN-Netzwerk eingerichtet ist bzw. wird, wobei für jeden Stream an einem oder mehreren Knotenpunkten, insbesondere Switches und/oder Bridges, des Netzwerkes Ressourcen reserviert sind und/oder werden, und Datenframes, die von wenigstens einem an dem jeweiligen Feldbus liegenden Gerät stammen und/oder für wenigstens ein an dem jeweiligen Feldbus liegendes Gerät bestimmt sind, in dem AVB- oder TSN-Netzwerk über den jeweiligen wenigstens einen Stream übertragen werden.

Sofern es die Bandbreite des AVB- oder TSN-Netzwerkes zulässt, beispielsweise ein Gigabit-Netzwerk zur Verfügung steht, können auch mehrere logische Feldbusse, für die dann zum Beispiel jeweils 50 Mbit/s als maximale Bandbreite für eine Echtzeit-Datenübertragung angenommen wird, im Netzwerk kombiniert werden. Es lassen sich also im Rahmen des erfindungsgemäßen Verfahrens auch mehrere Feldbusse über ein Netzwerk verbinden. Dann existieren gesicherte Ressourcen für jeden Feldbus im schnelleren AVB- bzw. TSN-basierten Netzwerk durch Streams. Die Reservierung kann beispielsweise anhand der maximalen physikalischen Feldbus-Geschwindigkeit im TSN-Backbone-Netzwerk erfolgen. Es kann eine niedrige Latenz durch schnellere Linkspeed erzielt werden und optional kann auf Preemption für Echtzeit-Anwendungen insbesondere mit vergleichsweise niedrigem Zyklus, beispielsweise unterhalb von 250 Mikrosekunden, zurückgegriffen werden.

Besonders bevorzugt werden für den oder jeden Feldbus wenigstens zwei Streams eingerichtet, und insbesondere über wenigstens einen Stream Datenframes in Richtung des jeweiligen Feldbusses und über wenigstens einen weiteren Stream Datenframes, die aus dem jeweiligen Feldbus stammen, übertragen. Dann kann die gesamte Datenübertragung in insbesondere beide Richtungen über zwei oder mehr Streams erfolgen, für die an einem oder mehreren auf dem Stream-Netzwerkpfad liegenden Knotenpunkten, insbesondere Switches und/oder Bridges, Ressourcen reserviert sind oder werden.

Ob wenigstens ein Stream für die eine Richtung und/oder wenigstens ein Stream für die andere Richtung vorliegt, kann insbesondere daran ausgemacht werden, dass (für jede Richtung) wenigstens eine Stream-ID vorliegt.

Im Rahmen des erfindungsgemäßen Verfahrens werden insbesondere Datenframes via Stream übertragen, welche als Nutzdaten von Sensoren einer Automatisierungsanlage erfasste Messwerte bzw. diese repräsentierende Daten und/oder für Aktoren einer Automatisierungsanlage bestimmte Stellwerte bzw. diese repräsentierende Daten umfassen. Alternativ oder zusätzlich werden Daten zur Konfiguration des Netzwerkes und eines oder mehrerer an einem Feldbus liegender Geräte, insbesondere Sensoren und/oder Aktoren, und/oder Daten zur periodischen Überwachung eines oder mehrerer an einem Feldbus liegender Geräte, übertragen.

Eine weitere bevorzugte Ausführungsform des erfindungsgemäßen Verfahrens zeichnet sich dadurch aus, dass für den oder jeden Feldbus der wenigstens eine Stream unter Rückgriff auf Konfigurationsdaten des (jeweiligen) Feldbusses, insbesondere auf Konfigurationsdaten des TIA-Portals des (jeweiligen) Feldbusses, eingerichtet wird bzw. worden ist. Die in der Regel ohnehin im Engineering eines Feldbusses vorhanden Konfigurationsdaten können auf einfache Weise verwendet werden. Als Beispiele für diese Parameter seien die Paketgröße, Paketanzahl, die Bandbreite, der update-Cycle, das Sendeintervall und die Latenz genannt.

Daten zwischen einem oder mehreren an dem jeweiligen Feldbus bzw. Feldbussegment liegenden Geräten und dem oder jeden Verbindungsknotenpunkt können gemäß dem bestehenden Feldbus-Standard, im Falle von PROFINET beispielsweise via Ethernet ohne AVB- oder TSN-Erweiterung (insbesondere gemäß IEEE 802.3) übertragen werden.

Auch kann vorgesehen sein, dass der oder jeder Feldbus über wenigstens zwei Verbindungsknotenpunkte an das AVB- oder TSN-Netzwerk angebunden ist, und jeder Verbindungsknotenpunkt einen Feldbus-Port in Richtung des jeweiligen Feldbusses und einen Stream-Port in Richtung des AVB- oder TSN-Netzwerkes aufweist, und jeder Verbindungsknotenpunkt ausgebildet und eingerichtet ist, um Datenframes, die an dem Feldbus-Port ankommen, wenigstens einen Stream-Parameter, insbesondere eine designierte Stream Adresse und/oder eine VLAN ID und/oder eine Priorität zuzuweisen, insbesondere voranzustellen, und/oder um aus Datenframes, die an dem Stream-Port ankommen, wenigstens einen Stream-Parameter, insbesondere eine designierte Stream Adresse und/oder eine VLAN ID und/oder eine Priorität zu entfernen.

In dem (den) Verbindungsknotenpunkt(en) ist bevorzugt eine logische Konfiguration vorgesehen, welche die Anbindung des Feldbusses an den (jeweiligen) Stream ermöglich, z. B. ist bevorzugt eine PRU in den jeweiligen Verbindungsknotenpunkt integriert. Bei einer PRU handelt es sich um eine programmierbare Funktion in einem Gerät mit mindestens 2 Ports, die je nach Programm empfangene oder zu sendende Frames vor der weiteren internen Verarbeitung oder dem Senden manipulieren kann und Inhalte hinzufügen, ändern und/oder entfernen kann. Das Programm der PRU kann dafür sorgen, dass alle ankommenden Frames, die über einen Tunnel gesendet werden müssen, im übergeordneten AVB- oder TSN-Netzwerk als Stream erkennbar sind. Datenframes eines AVB- oder TSN-Streams sind insbesondere über die verwendete Zieladresse und/oder die VLAN ID und/oder VLAN Priorität erkennbar.

Bevorzugt wird von dem oder jedem Verbindungsknotenpunkt wenigstens ein Stream-Parameter in einem Header von Datenframes aus dem Feldbus, die am Feldbus-Port ankommen, vorgesehen bzw. dem jeweiligen Datenframe ein (Stream-)Header mit einem oder mehreren Stream-Parametern vorangestellt.

Der bzw. jeder Verbindungsknotenpunkt bildet praktisch einen Connector zwischen dem (jeweiligen) Feldbus(-Netzwerk) und dem AVB- oder TSN-Netzwerk, in dem wenigstens ein Stream eingerichtet ist bzw. wird bzw. einem zu dem (jeweiligen) Stream gehörigen Netzwerkpfad, der auch als Stream-Netzwerkpfad bezeichnet werden kann. Der wenigstens eine Verbindungsknotenpunkt übernimmt insbesondere die Funktion eines Proxys und/oder bildet (jeweils) einen Endpunkt des (jeweiligen) Streams. Bei dem (den) Verbindungsknotenpunkt(en) handelt es sich bevorzugt um ein 2- oder Mehr-Port-Gerät, welches zumindest einen Port im Feldbus hat und zumindest einen weiteren Port in Richtung des Stream-Netzwerkpfades.

Der Einsatz von Verbindungsknotenpunkten ermöglicht eine reibungsfreie Überführung von Feldbus-Datenframes, welche beispielsweise als Ethernet(ohne AVB- oder TSN-Erweiterung)-Frames oder Datenframes mit einer anderen Codierung vorliegen können, in Stream-fähige Datenframes, insbesondere mit einer designierte Stream Adresse und/oder einem VLAN-tag, insbesondere einer VLAN ID und/oder einer Priorität, und/oder anderen Stream-Parametern, die sich in der Regel in einem Frame-Header befinden, und umgekehrt. Der jeweilige Stream-Datenframe umfasst dann insbesondere den Header und dem Header folgende Nutzdaten, die auch als "Payload" bezeichnet werden. Die "Payload" des Stream-Datenframes entspricht dann insbesondere dem Feldbus-Datenframe. In umgekehrter Richtung wird insbesondere wenigstens ein Stream-Parameter bzw. ein Header entfernt.

Es kann auch sein, dass wenigstens ein Verbindungsknoten bzw. dessen Funktion, in ein Gerät, etwa ein Steuergerät beispielsweise in Form einer SPS, integriert ist.

Sind mehrere Feldbusse auf die erfindungsgemäße Weise an ein AVB- oder TSN-Netzwerk angebunden, ist bevorzugt für jeden Feldbus wenigstens ein Verbindungsknotenpunkt vorgesehen, sind bevorzugt für jeden Feldbus wenigstens zwei Verbindungsknotenpunkte vorgesehen.

Ist einer oder sind mehrere Verbindungsknotenpunkte vorgesehen, bilden diese bevorzugt Knotenpunkte, an denen für den wenigstens einen Stream Ressourcen reserviert sind und/oder werden.

Der bzw. die Verbindungsknotenpunkt(e) und/oder gegebenenfalls vorhandene weitere Knotenpunkte sind bevorzugt als AVB- oder TSN-fähige Knotenpunkte ausgebildet. Es kann sich beispielsweise (jeweils) um eine AVB- bzw. TSN-fähige Bridge und/oder einen AVB- bzw. TSN-fähigen Switch oder andere AVB-bzw. TSN-fähige Geräte handeln. Der wenigstens eine Port des Verbindungsknotenpunktes in Richtung des Netzwerkes ist bevorzugt ein AVB- bzw. TSN-Port.

Eine weitere Ausführungsform zeichnet sich dadurch aus, dass eines oder mehrere Geräte des oder jeden Feldbusses mit dem Feldbus-Port des einen Verbindungskotenpunktes und eines oder mehrere weitere Geräte des oder jeden Feldbusses mit dem Feldbus-Port des anderen Verbindungskotenpunktes verbunden sind. Dabei versteht sich, dass die Verbindung des jeweiligen Gerätes mit dem jeweiligen Feldbus-Port direkt oder auch indirekt - über ein oder mehrere weitere Komponenten - sein kann, beispielsweise über einen oder mehrere Feldbus-Knotenpunkte, insbesondere Switches und/oder Bridges, des jeweiligen Feldbusses.

Gegenstand der vorliegenden Erfindung ist ferner ein Steuerungsverfahren für einen industriellen technischen Prozess oder ein Fahrzeug, bei dem zwischen wenigstens zwei Geräten einer Automatisierungsanlage Daten unter Durchführung des erfindungsgemäßen Verfahrens zur Datenkommunikation ausgetauscht werden und auf Basis der ausgetauschten Daten eine Steuerung des industriellen technischen Prozesses oder Fahrzeugs erfolgt.

Ein weiterer Gegenstand der Erfindung ist eine Vorrichtung, die zur Durchführung des erfindungsgemäßen Verfahrens zur Daten-Kommunikation bzw. des erfindungsgemäßen Steuerungsverfahrens ausgebildet und eingerichtet ist, insbesondere umfassend:
- einen oder mehrere bevorzugt AVB- oder TSN-fähige Knotenpunkte, insbesondere Bridges und/oder Switches, und
- wenigstens zwei Geräte, die bevorzugt Bestandteile einer industriellen Automatisierungsanlage sind und von denen wenigstens eines an einem Feldbus anlegbar ist oder an einem Feldbus liegt.

Weiterhin betrifft die Erfindung ein Computerprogramm, das Programmcodemittel zur Durchführung der Schritte des erfindungsgemäßen Verfahrens zur Daten-Kommunikation bzw. des erfindungsgemäßen Steuerungsverfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Daten-Kommunikation bzw. des erfindungsgemäßen Steuerungsverfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung von Ausführungsformen des Verfahrens der vorliegenden Erfindung unter Bezugnahme auf die beiliegende Zeichnung deutlich. Darin ist
- FIG 1: eine rein schematische Darstellung der logischen Anordnung eines auf Ethernet basierenden PROFINET-Feldbusses einer industriellen Automatisierungsanlage;
- FIG 2: eine rein schematische Darstellung eines Feldbusses einer industriellen Automatisierungsanlage, für den in einem TSN-Netzwerk zwei Streams eingerichtet sind;
- FIG 3: eine rein schematische Darstellung eines als 2-Port-Gerät, z.B. mit integrierter PRU ausgebildeten Verbindungsknotenpunktes;
- FIG 4: eine rein schematische Darstellung eines Gerätes mit integriertem Verbindungsknotenpunkt;
- FIG 5: eine rein schematische Darstellung eines aus einem Feldbus stammenden Ethernet-Datenframes, wie er an dem Feldbus-Port eines Verbindungsknotenpunktes ankommt bzw. von diesem abgesendet wird, und eines Stream-Datenframes, wie er am Stream-Port eines Verbindungsknotenpunktes ankommt bzw. von diesem abgesendet wird;
- FIG 6: eine rein schematische Darstellung der in einem Feldbus übertragenen Daten;
- FIG 7: eine rein schematische Darstellung eines TSN-Netzwerkes, das drei Feldbusse miteinander verbindet;
- FIG 8: eine rein schematische Darstellung eines TSN-Netzwerkes, das zwei Feldbussegmente und ein einzelnes Feldgerät miteinander verbindet;
- FIG 9: eine rein schematische Darstellung von an dem Feldbus-Port eines Verbindungsknotenpunktes ankommenden Daten und einem von diesem abgehenden Stream-Datenframe;
- FIG 10: eine rein schematische Darstellung von vier an dem Feldbus-Port eines Verbindungsknotenpunktes ankommenden Feldbus-Datenframes und den zugehörigen Stream-Datenframes;
- FIG 11: eine rein schematische Darstellung zur Weiterleitung der Stream-Datenframes im TSN-Netzwerk;
- FIG 12: eine rein schematische Darstellung zur Weiterleitung von Feldbus-Datenframes in einem Netzwerk mit höherer Bandbreite in vorgegebenen Zeitfenstern.

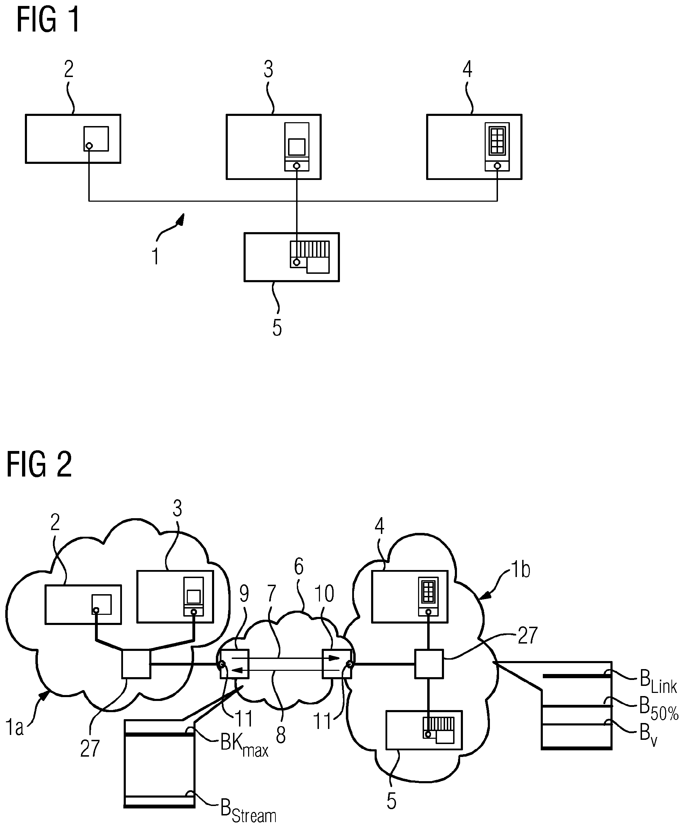

Die FIG 1 zeigt in rein schematischer Darstellung vier Geräte einer industriellen Automatisierungsanlage für einen in den Figuren nicht weiter dargestellten technischen Prozess, die für einen Datenaustausch untereinander über einen Ethernetbasierten Feldbus 1, konkret einen PROFINET-Feldbus, miteinander verbunden sind. Gezeigt ist dabei der logische Bus, der auf einem in der FIG 1 nicht weiter dargestellten Ethernet-Netzwerk basiert.

Bei den vier Geräten handelt es sich um eine speicherprogrammiere Steuerung 2, die im Weiteren als SPS bezeichnet wird, eine Anzeige-Vorrichtung in Form eines Bildschirmes 3, ein Bediener-Panel 4 und ein Eingabe/Ausgabe-, also I/O-Gerät 5, das einen oder mehrere in der Figur nicht dargestellte Sensoren und/oder Aktoren der Automatisierungsanlage umfasst bzw. mit einem solchen oder solchen verbunden ist. Es sei betont, dass der eine Bildschirm 3, das eine Bediener-Panel 4 und insbesondere das eine I/O-Gerät 5 beispielhaft gezeigt sind und viele weitere Feldgeräte, insbesondere I/O-Geräte 5, an den Feldbus 1 angeschlossen sind bzw. werden können.

Im Betrieb der nicht weiter gezeigten Automatisierungsanlage werden in an sich bekannter Weise Daten zwischen der SPS 2 und den Feldgeräten 3, 4, 5 ausgetauscht. Insbesondere werden von den I/O-Geräten 5 im Betrieb mittels Sensoren erfasste Messwerte an die SPS 2 gesendet und von dieser u.a. auf Basis der Messwerte ermittelte Steuerwerte für Aktoren der Automatisierungsanlage werden von der SPS 2 an I/O-Geräte 5 gesendet. Auch werden Daten von der SPS 2 an den Bildschirm 3 gesendet, um dort für einen Benutzer visualisiert zu werden und es werden Daten, die insbesondere Benutzerbefehle repräsentieren, von dem Bediener-Panel 4 an die SPS 2 gesendet.

Die FIG 2 zeigt die SPS 2, den Bildschirm 3, das Bediener-Panel 4 und I/O-Gerät 5, wobei der Feldbus 1 in zwei Segmente 1a, 1b unterteilt ist, und die beiden Feldbussegmente 1a, 1b über ein TSN-Netzwerk 6 miteinander verbunden sind. Das TSN-Netzwerk 6 ist in FIG 2 schematisch durch eine Wolke angedeutet. Die Feldbussegment-Netzwerke ebenfalls.

In dem TSN-Netzwerk 6 sind in einem Schritt des hier beschriebenen Ausführungsbeispiels des erfindungsgemäßen Verfahrens zur Daten-Kommunikation zwei Streams 7, 8 für eine schnelle, gesicherte Datenübertragung mit garantierter Qualität, insbesondere Latenz, zwischen an dem einen Feldbussegment 1a liegenden Geräten 2, 3 und an dem andere Feldbussegment 1b liegenden Geräten 4, 5 eingerichtet worden.

Für jeden der beiden Streams 7, 8 sind für das Einrichten der Streams an mehreren Knotenpunkten, vorliegend Switches des TSN-Netzwerks 6 Ressourcen reserviert worden.

Die beiden Streams 7, 8 sind unter Rückgriff auf Konfigurationsdaten des Feldbusses 1 automatisiert eingerichtet worden. Sämtliche für die Einrichtung der Streams 6, 7 benötigten Parameter sind ohnehin im Engineering des Feldbusses 1 vorhanden, konkret in dem TIA Portal, und können auf einfache Weise verwendet werden. Als Beispiele für diese Parameter seien die Paketgröße, Paketanzahl, die sich dadurch ergebende Bandbreite, der update-Cycle, das Sendeintervall und die Latenz genannt.

Datenframes, die von der SPS 2 stammen und/oder Datenframes, die von dem Bildschirm 3 stammen, werden über den Stream 7 in Richtung des Feldbussegmentes 1b übertragen, und Datenframes, die von dem Bedienerpanel 4 stammen und/oder Datenframes, die von dem IO-Gerät 5 stammen, werden über den Stream 8 in Richtung des Feldbussegmentes 1a übertragen.

Für eine reibungsfreie Überführung der von dem jeweiligen Gerät 2, 3, 4, 5, abgehenden Feldbus-Datenframes, welche als Ethernet-Frames (gemäß IEEE 802.3) vorliegen können und bei dem dargestellten Ausführungsbeispiel vorliegen, in Stream-fähige Datenframes, und umgekehrt, sind vorliegend zwei Verbindungsknotenpunkte 9, 10 vorgesehen. Jedes der beiden Feldbussegmente 1a, 1b ist über jeweils einen Verbindungsknotenpunkt 9, 10 an das TSN-Netzwerk 6 angebunden, konkret das Segment 1a über den Verbindungsknotenpunkt 9 und das Segment 1b über den Verbindungsknotenpunkt 10.

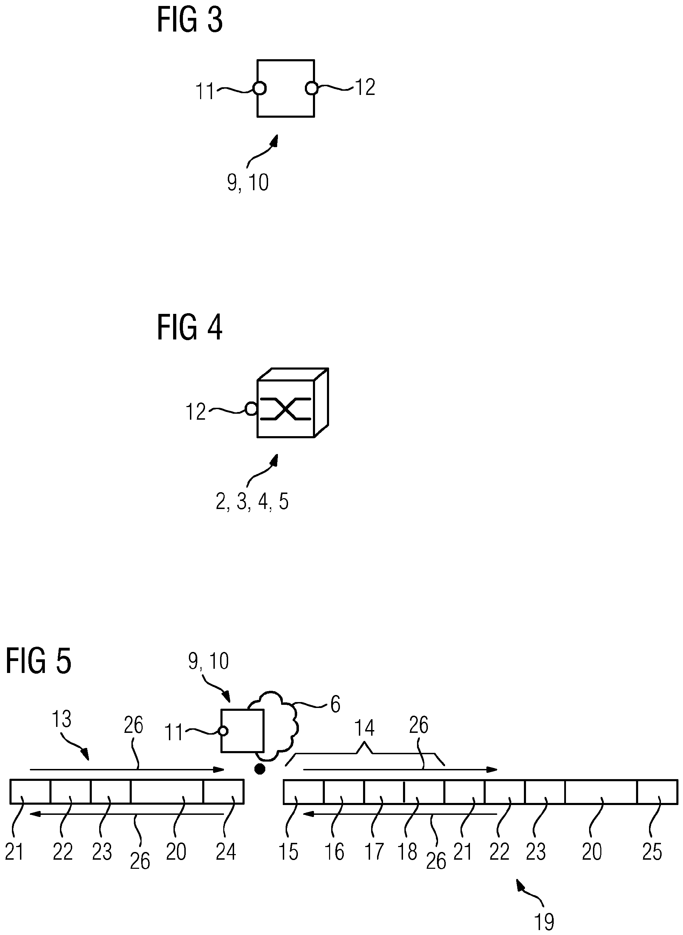

Beide Verbindungsknotenpunkte 9, 10 sind als 2-Port-Geräte ausgebildet und haben einen Feldbus-Port 11 in Richtung des jeweiligen Feldbussegmentes 1a, 1b und einen Stream-Port 12 in Richtung des TSN-Netzwerkes 6. Die Ports 11, 12 können der FIG 3 entnommen werden, die beispielhaft eine vergrößerte, rein schematische Darstellung eines als 2-Port-Gerät ausgebildeten Verbindungsknotenpunktes 9, 10 zeigt. In der FIG 2 sind nur die Feldbus-Ports 11 gezeigt, nicht jedoch die Stream-Ports 12 in Richtung des TSN-Netzwerkes 6.

Alternativ zu dem dargestellten Ausführungsbeispiel kann die Funktion eines Verbindungsknotenpunktes 9, 10 auch direkt in ein Gerät 2, 3, 4, 5 integriert sein, was dann unmittelbar an das TSN-Netzwerk 6 angeschlossen werden kann. Diese alternative Ausgestaltung ist rein schematisch in der FIG 4 dargestellt. Das Gerät 2, 3, 4, 5 hat dann einen Stream-Port 12, über den es an ein TSN-Netzwerk 6 angeschlossen werden kann. Diese Ausgestaltung kann insbesondere in demjenigen Falle zum Einsatz kommen, dass nicht zwei Feldbussegmente 1a, 1b via Stream miteinander verbunden werden, sondern beispielsweise ein Feldbus 1 oder Feldbussegment 1a, 1b mit einem Gerät 2, 3, 4,5, das nicht an einem Feldbus 1 liegt.

Bei dem hier beschriebenen Ausführungsbeispiel ist eine logische Konfiguration in den Verbindungsknotenpunkten 9, 10 vorgesehen, welche die Überführung von Feldbus- in Stream-Datenframes und umgekehrt ermöglicht, konkret ist eine entsprechend ausgestaltete, in den Figuren nicht dargestellte PRU in jeden der beiden Verbindungsknotenpunkte 9, 10 integriert, welche durch ihr Programm die Pakete gezielt manipuliert und die benötigte Kennzeichnung der Datenframes (vgl. FIG 5) hinzufügt oder entfernt.

Die Verbindungsknotenpunkte 9, 10 sind dabei ausgebildet und eingerichtet, um Ethernet-Datenframes 13, die von Geräten 2, 3, 4, 5 aus dem jeweiligen Feldbussegment 1a, 1b gesendet werden, und an dem Feldbus-Port 11 des jeweiligen Verbindungsknotenpunktes 9, 10 ankommen, einen Header 14 mit Stream-Parametern, konkret einer designierten Stream Adresse 15, einer Source-Adresse 16, einer VLAN ID 17 und eine Priorität 18 voranzustellen, und über den jeweiligen Stream-Port 12 weiterzuleiten. Der Ethernet-Frame 13 mit vorangestelltem Stream-Header 14 bildet einen TSN-Stream-Datenframe 19, wie er in der rechten Hälfte der FIG 5 dargestellt ist.

Der Ethernet-Datenframe 13 umfasst neben den Nutzdaten 20 (auch als "Payload" bezeichnet), diesen vorangestellt seinerseits eine designierte Adresse 21, eine Source-Adresse 22 eine Ethertype 23 und hinter den Nutzdaten 20 eine CRC 24.

Von den Verbindungsknotenpunkten 9, 10 wird eine neue CRC 25 vorgesehen.

Beide Verbindungsknotenpunkte 9, 10 sind ausgebildet und eingerichtet, um Datenframes, die von Geräten 2, 3, 4, 5 aus dem jeweiligen Feldbussegment 1a, 1b gesendet werden, und an dem Feldbus-Port des jeweiligen Verbindungsknotenpunktes 9, 10 ankommen, Stream-Parameter voranzustellen, und um aus Datenframes, die an dem Stream-Port ankommen, Stream-Parameter zu entfernen.

Die Verbindungsknotenpunkte 9, 10 sind darüber hinaus beide ausgebildet und eingerichtet, um aus TSN-Stream-Datenframes 19, welche via Stream 7, 8 an ihrem Stream-Port 12 ankommen, den Stream-Header 14 mit der designierten Stream Adresse 15, Source-Adresse 16, VLAN ID 17 und Priorität 18 zu entfernen und Datenframes 13 ohne die entfernten Parameter, also Ethernet-Datenframes 13, über den Feldbus-Port 11 an das jeweilige Feldbussegment 1a, 1b weiterzuleiten.

In der FIG 5 ist beispielhaft ein Verbindungsknotenpunkt 9, 10 zwischen dem Feldbus-Datenframe 13 und Stream-Datenframe 19 dargestellt und über Pfeile 26 ist angedeutet, dass eine entsprechende Manipulation der Datenframes 13, 19 für beide Kommunikationsrichtungen stattfindet.

Es sei angemerkt, dass sowohl an den beiden Verbindungsknotenpunkten 9, 10 als auch an weiteren, zwischen diesen liegenden TSN-fähigen Knotenpunkten des TSN-Netzwerkes, die in den Figuren nicht weiter dargestellt sind, Ressourcen für die beiden Streams 7, 8 reserviert sind.

Bei dem dargestellten Ausführungsbeispiel wurde für die Reservierung für beide Richtungen konkret auf das Stream Reservation Protocol (SRP) zurückgegriffen, welches als IEE802.1Qat standardisiert ist.

Durch die Reservierung sind die zu übertragenden Daten vor einer zu großen Einwirkung von anderen Echtzeitanwendungen und/oder sonstigen Anwendungen im Netzwerk geschützt. Andere Anwendungen haben insbesondere nur eine kleine, aber genau bekannte Auswirkung auf die Übertragungszeit. Durch die Ressourcenreservierung kommt es nicht zum Verlust von Echtzeitdaten.

Innerhalb des jeweiligen Feldbussegmentes 1a, 1b findet die Datenübertragung via Ethernet statt. Bei dem dargestellten Ausführungsbeispiel konkret von dem jeweiligen Gerät 2, 3, 4, 5 zu einem Feldbus-Switch 27 des jeweiligen Feldbussegmentes 1a, 1b und von diesem zu dem jeweiligen Verbindungsknotenpunkt 9, 10, der dem Feldbussegment 1a, 1b zugeordnet ist.

In der FIG 2 ist über an das TSN-Netzwerk 6 bzw. das Netzwerk des Feldbussegmentes 1b angrenzende "Sprechblasen" die Nutzung der Bandbreite einerseits für das TSN- und andererseits das Feldbus-Netzwerk rein schematisch angedeutet.

Konkret sind für das Feldbus-Netzwerk (rechte "Sprechblase") einerseits eine Link-Bandbreite Bₗᵢₙₖₜ eine Bandbreite B_{50%}, welche der Hälfte davon entspricht, und eine unterhalb von B_{50%} liegende, tatsächlich verwendete Bandbreite Bᵥ eingezeichnet. Vorliegend steht eine Bandbreite von 100 Mbit/s zur Verfügung, die fest auf eine Hälfte B_{50%} (50 Mbit/s) für Echtzeit-Daten und eine weitere Hälfte (in der Regel 50 Mbit/s) für anderen Verkehr aufgeteilt ist.

In dem TSN-Netzwerk 6, in welchem eine höhere Bandbreite zur Verfügung steht, ist die Situation derart, dass eine maximale Klassen Bandbreite BKₘₐₓ zur Verfügung steht und eine Stream-Bandbreite Bₛₜᵣₑₐₘ, die darunter liegt. Die Stream-Bandbreite kann insbesondere entweder aus der Konfiguration des Feldbusses 1, insbesondere der TIA-Konfiguration entnommen worden sein, beispielsweise 10 MBit/s betragen, oder auch, insbesondere im Falle von PROFINET Durch die Systemdefinition auf einen Standardwert von 50 Mbit/s festgelegt werden.

Alternativ zu dem in der FIG 2 dargestellten Ausführungsbeispiel mit einem Feldbus 1 mit zwei Feldbussegmenten, 1a, 1b, zwischen denen Daten via Stream 7, 8, übertragen werden, können auch mehrere Feldbusse 1 an einem TSN-Netzwerk 6 liegen und Streams 7, 8 für die mehreren Feldbusse 1 in dem TSN-Netzwerk 6 eingerichtet sein.

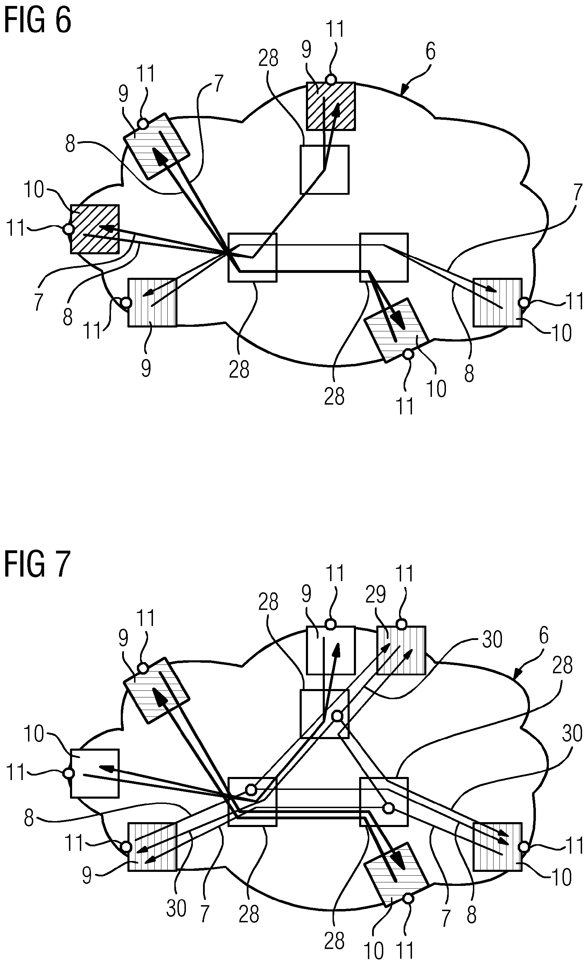

Eine Konstellation für mehr als eines Feldbusses 1 ist beispielhaft und rein schematisch in der FIG 6 gezeigt. Gleiche Komponenten sind darin mit gleichen Bezugsziffern versehen. Es sei angemerkt, dass in der FIG 6 die Feldbussegmente 1a, 1b nicht dargestellt sind, sondern nur drei Paare von Verbindungsknotenpunkten 9, 10 , zwischen denen jeweils zwei Streams 7, 8 in entgegengesetzter Richtung für jeweils einen Feldbus 1 mit über die Streams verbundenen Feldbussegmenten 1a, 1b eingerichtet sind. Für jeden einzelnen der drei Feldbusse 1 mit jeweils zwei Segmenten 1a, 1b gilt, dass die Anordnung wie in FIG 2 ist.

Man erkennt, dass der Netzwerkpfad für das horizontal und das vertikal schraffierte Paar von Verbindungsknotenpunkten 9, 10 gleich ist, konkret die Streams 7, 8 für beide Verbindungsknotenpunktpaare und somit zugehörigen Feldbusse 1 über die gleichen beiden TSN-Switches 28 des TSN-Netzwerkes 6 verlaufen. Über den linken dieser beiden TSN-Switches 28 gehen auch noch die Streams 7, 8 des dritten Feldbusses 1. An diesem, in der FIG 6 unten links liegenden TSN-Switch 28 liegen somit Reservierungen für alle sechs Streams 7, 8 vor, an dem unten rechts liegenden TSN-Switch 28 für vier Streams 7, 8 und an dem oberen Switch 28 nur für zwei Streams 7, 8.

Es sei betont, dass diese Konfiguration rein beispielhaft ist und das TSN-Netzwerk 6 eine beliebige andere Anzahl von Switches 28 umfassen und die Reservierungen auch anders sein können.

Weiterhin kann alternativ zu den bisher beschriebenen Ausführungsbeispielen auch vorgesehen sein, dass mehr als zwei Feldbussegmente 1a, 1b über ein TSN-Netzwerk 6 verbunden und in diesem Streams 7, 8 eingerichtet sein können.

Es sei angemerkt, dass im einfachsten Fall ein Feldbussegment auch von einem einzelnen, dem Feldbus 1 zugeordneten Gerät 2, 3, 4, 5 gebildet sein. Es ist also auch möglich, dass zwei oder mehr Feldbussegmente 1a, 1b und weitere Geräte 2, 3, 4, 5 über ein TSN-Netzwerk 6 verbunden und in diesem Streams 7, 8 eingerichtet sein können.

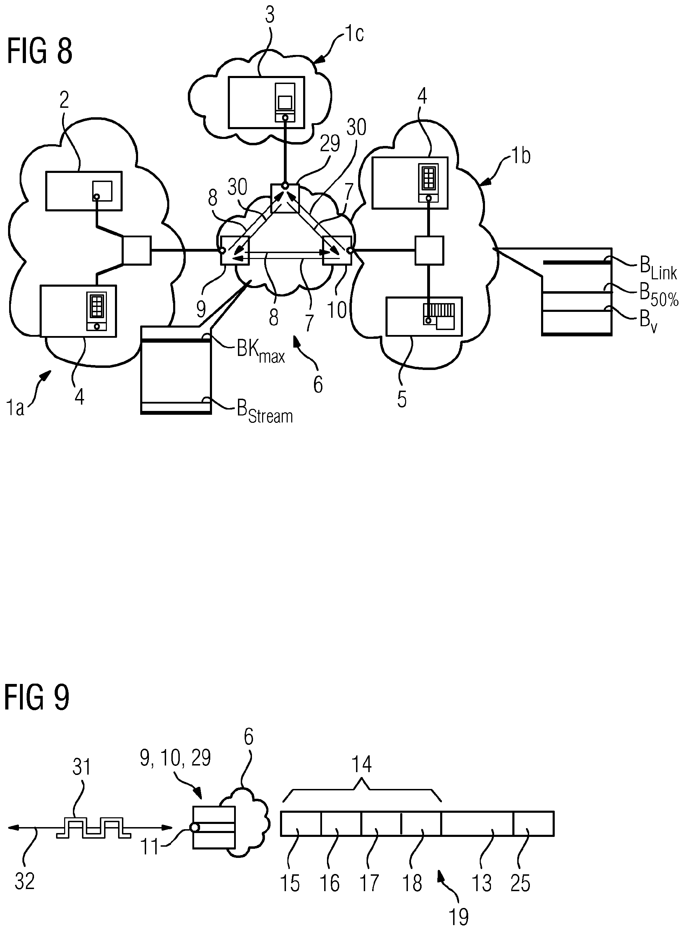

Eine Konstellation, in der zwei Feldbussegmente 1a, 1b und ein weiteres Feldbus-Gerät 3 über das TSN-Netzwerk 6 verbunden sind und über dieses kommunizieren, ist in den Figuren 7 und 8 rein beispielhaft und schematisch dargestellt. In diesen Figuren sind wiederum gleiche Bezugszeichen verwendet worden.

In einem solchen Fall werden drei Verbindungsknotenpunkte 9, 10, 29 für den Feldbus 1 vorgesehen und drei Streams 7, 8, 30 in dem TSN-Netzwerk 6 eingerichtet.

In FIG 7 sind dabei - in Analogie zu FIG 6 - nur die Verbindungsknotenpunkte 9, 10, 29 und Streams 7, 8, 30 für die drei Feldbusse 1, von denen einer drei über das TSN-Netzwerk 6 verbundenen Feldbussegmente 1a, 1b, 1c aufweist und dem somit drei Verbindungsknotenpunkte 9, 10, 29 zugeordnet und für den drei Streams 7, 8, 30 eingerichtet sind, gezeigt. Die FIG 8 zeigt - in Analogie zu der FIG 2 - die Situation nur eines Feldbusses 1 aus der FIG 7, konkret den Feldbus 1 mit drei Segmenten 1a, 1b, 1c, wobei das dritte Feldbussegment 1c durch eine einzelnes Gerät, konkret einen Bildschirm 3 gebildet wird.

Von jedem Feldbussegment 1a, 1b, 1c geht ein Stream 7, 8, 30 ab, über den jeweils an beide anderen Feldbussegmente 1a, 1b, 1c Daten gesendet werden (vgl. auch die Pfeile in FIG 7 und 8). Dies ist eine Multiple Listener per Talker Konstellation und für die Ressourcen-Reservierung wurde bei dem dargestellten Ausführungsbeispiel auf das Stream Reservation Protocol (SRP) zurückgegriffen, welches dies unterstützt.

Die FIG 9 zeigt zur weiteren Veranschaulichung in rein schematischer Darstellung Daten 31, die im Feldbus 1, insbesondere bis zu einem Verbindungsknotenpunkt 9, 10, 29 oder ab einem solchen übertragen werden (angedeutet durch den Doppelpfeil 32), rechts von den Daten 30 einen Verbindungsknotenpunkt 9, 10, 29 mit Feldbus-Port 11 und wiederum rechts davon nochmals einen Stream-Datenframe 19 mit Stream-Header 14 und Nutzdatenbereich bzw. "Payload" 13 und CRC 25. Die Anbindung des Verbindungsknotenpunktes 9, 10, 29 an das TSN-Netzwerk 6 ist auch in der FIG 6 schematisch durch eine Wolke angedeutet.

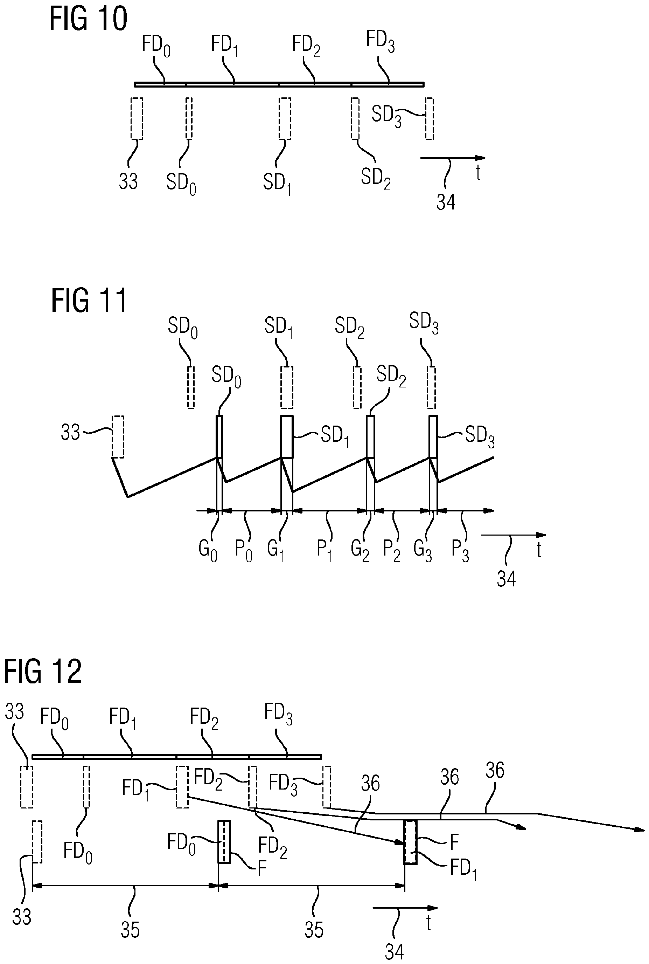

In den Figuren 10 und 11 wird ist die Frame-Weiterleitung näher veranschaulicht, wobei in FIG 10 vier nacheinander an einem Verbindungsknotenpunkt 9, 10, 29 ankommenden Feldbus-Datenframes schematisch über die Zeit t dargestellt sind. Die Feldbus-Datenframes sind in der FIG 10 mit FD₀, FD₁, FD₂ und FD₃ bezeichnet. Die Feldbus-Datenframes FD₀, FD₁, FD₂, FD₃ können mit der maximal möglichen Bandbreite ankommen.

Darunter dargestellt sind die dazu korrespondierenden vier Stream-Datenframes (welche durch die streamfähig "eingepackten" Feldbus-Datenframes gegeben sind) die mit SD₀, SD₁, SD₂ und SD₃ bezeichnet sind. Links des ersten Stream-Datenframes SD₀ ist mit gestrichelter Linie ein vorangegangene Stream-Datenframe angedeutet. Man erkennt, dass die Stream-Datenframes SD₀, SD₁, SD₂, SD₃ eine geringere Ausdehnung in Richtung der Zeitachse 34 aufweisen, was auf die im TSN-Netzwerk 6 gegenüber dem Feldbus-Netzwerk höhere Badbreite zurückzuführen ist. Die Stream-Datenframes SD₀, SD₁, SD₂, SD₃ können mit der höheren Bandbreite übertragen werden.

In der FIG 11 sind die vier Stream-Datenframes SD₀, SD₁, SD₂, SD₃ oben nochmals dargestellt, wobei darunterliegend skizziert ist, dass die Weiterleitung derart erfolgt, dass nach dem Senden jedes Stream-Datenframes SD₀, SD₁, SD₂, SD₃ eine Pause P₀, P₁, P₂, P₃ gemacht wird, deren Länge von der gesendeten Datenmenge, die in der FIG als Größe G₀, G₁, G₂, G₃ des jeweiligen Stream-Datenframes SD₀, SD₁, SD₂, SD₃ angedeutet ist, und der Bandbreite, welche für den jeweiligen Stream 7, 8, 30 reserviert ist, abhängt. Sind beispielsweise 25 % der Bandbreite für einen Stream 7, 8, 30 reserviert, ist die nach jedem Datenframe SD₀, SD₁, SD₂, SD₃ folgende Pause dreimal so lang, wie die Übertragungszeit für den Frame SD₀, SD₁, SD₂, SD₃. Je größer der jeweilige Stream-Datenframe SD₀, SD₁, SD₂, SD₃ ist,

je länger ist auch die Pause P₀, P₁, P₂, P₃. Über die jeweilige Pause wird die Einhaltung der Bandbreite garantiert. Wurde die Bandbreite vorher eingehalten, kann der nächste Frame SD₀, SD₁, SD₂, SD₃ immer direkt übertragen werden, wenn er ankommt.

Diese Vorgehensweise entspricht dem AVB- bzw. dem TSN-Model mit Reserved Traffic für Streams unter Verwendung des CBS (Credit Based Shaper) Mechanismus (IEE 802.1Qav). Für die Streams sind Netzwerkressourcen, u.a. die Bandbreite, reserviert.

Es sei angemerkt, dass in der FIG 11 unterhalb des jeweiligen Streams SD₀, SD₁, SD₂, SD₃ mit der "gezackten" Linie der "Credit" angedeutet ist, der sich nach der Übertragung eines Frames SD₀, SD₁, SD₂, SD₃ aus dem negativen Bereich während der Pause wieder bis auf Null "erholen" muss, damit der nächste Frame SD₀, SD₁, SD₂, SD₃ übertragen werden darf.

Eine der Anmelderin bekannte Alternative der Übertragung von Feldbus-Datenframes FD₀, FD₁, FD₂, FD₃ in einem Netzwerk mit höherer Bandbreite, welche diese Vorteile nicht bietet, ist in der FIG 12 - wiederum rein schematisch - dargestellt.

Dabei sind in der FIG 12 oben - in Analogie zu der FIG 10 - vier Feldbus-Datenframes FD₀, FD₁, FD₂, FD₃ in einem Feldbus-Netzwerk mit geringerer Bandbreite und darunter in einem Netzwerk mit höherer Bandbreite gezeigt. Die Feldbus-Datenframes FD₀, FD₁, FD₂, FD₃ werden nicht, wie unter Bezugnahme auf FIG 11 beschrieben, über Streams mit über Reservierungen gesicherten Ressourcen übertragen, sondern es ist in jedem Netzwerkzyklus 35 ein festes Zeitfenster F für die Übertragung der Frames FD₀, FD₁, FD₂, FD₃ vorgesehen. Ist die Datenmenge insbesondere eines Frames zu groß, um innerhalb des Fensters F vollständig übertragen zu werden, muss die Übertragung im nächsten Zyklus erfolgen bzw. fortgesetzt werden, was in der FIG 12 durch die in den jeweils folgenden Zyklus weisenden Pfeile 36 angedeutet ist, und es kommt zu einem Stau von Paketen. Die Bandbreite kann nie ganz ausgenutzt werden. Ein weiteres Problem dieser zeitbasierten Weiterleitung besteht darin, dass ein unterschiedlicher Takt im Feldbussystem (Anwendung ist Zeittreiber) und dem Netzwerk höherer Bandbreite (Systemzeit im Netzwerk) kommen kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Die Erfindung ist definiert durch die folgenden Ansprüche.

## Patentansprüche

1. Verfahren zur Daten-Kommunikation in einem industriellen Netzwerk, bei dem
- Daten zwischen wenigstens zwei Geräten (2, 3, 4, 5), von denen wenigstens ein Gerät an einem Feldbus (1) liegt, übertragen werden,
- die Datenübertragung zumindest abschnittsweise über ein AVB- oder TSN-Netzwerk (6), erfolgt, in dem für den Feldbus (1) wenigstens ein Stream (7, 8, 30) eingerichtet ist bzw. wird, für den wenigstens einen Stream (7, 8, 30) an einem oder mehreren Knotenpunkten (9, 10, 29), welche als Switches und/oder Bridges ausgebildet sind, des Netzwerks (6) Ressourcen reserviert sind und/oder werden,
- Datenframes (13), die von wenigstens einem an dem Feldbus liegenden Gerät stammen und/oder für wenigstens ein an dem Feldbus liegendes Gerät bestimmt sind, über den wenigstens einen Stream (7, 8, 30) übertragen werden,
**dadurch gekennzeichnet, dass**
- der oder jeder Feldbus (1) über wenigstens einen Verbindungsknotenpunkt (9, 10, 29) an das AVB- oder TSN-Netzwerk (6) angebunden ist,
- der wenigstens eine Verbindungsknotenpunkt (9, 10, 29) einen Feldbus-Port (12) in Richtung des jeweiligen Feldbusses (1) und einen Stream-Port (12) in Richtung des AVB- oder TSN-Netzwerkes (6) aufweist,
- der wenigstens eine Verbindungsknotenpunkt (9, 10, 29) ausgebildet und eingerichtet ist, um Datenframes (13), die an dem Feldbus-Port (11) ankommen, wenigstens einen Stream-Parameter, in Form einer designierten Stream Adresse (15) und/oder einer VLAN ID (17) und/oder eine Priorität (18) zuzuweisen und/oder um aus Datenframes (19), die an dem Stream-Port (12) ankommen, wenigstens einen Stream-Parameter, in Form einer designierten Stream Adresse (15) und/oder einer VLAN ID (17) und/oder eine Priorität (18) zu entfernen.

2. Verfahren nach Anspruch 1,
**dadurch gekennzeichnet, dass**
zwei oder mehr Feldbusse(1), an denen jeweils wenigstens ein Gerät (2, 3, 4, 5) liegt, vorgesehen sind, und für jeden Feldbus (1) wenigstens ein dem jeweiligen Feldbus (1) zugeordneter Stream (7, 8, 30) in dem AVB- oder TSN-Netzwerk (6) eingerichtet ist bzw. wird, wobei für jeden Stream (7, 8, 30) an einem oder mehreren Knotenpunkten (9, 10, 29), welche als Switches und/oder Bridges ausgebildet sind, des Netzwerkes (6) Ressourcen reserviert sind und/oder werden, und Datenframes (13), die von wenigstens einem an dem jeweiligen Feldbus (1) liegenden Gerät (2, 3, 4, 5) stammen und/oder für wenigstens ein an dem jeweiligen Feldbus (1) liegendes Gerät (2, 3, 4, 5) bestimmt sind, in dem AVB- oder TSN-Netzwerk (6) über den jeweiligen wenigstens einen Stream (7, 8, 30) übertragen werden.

3. Verfahren nach einem der vorhergehenden Ansprüche, **dadurch gekennzeichnet, dass**
wenigstens ein Stream (7, 8, 30) zwischen zwei Segmenten (1a, 1b, 1c) eines Feldbusses (1), eingerichtet ist bzw. wird, wobei an zumindest einem Feldbussegment (1a, 1b, 1c) mehrere Geräte (2, 3, 4, 5) liegen.

4. Verfahren nach einem der vorhergehenden Ansprüche, **dadurch gekennzeichnet, dass**
für den oder jeden Feldbus (1) der wenigstens eine Stream (7, 8, 30) unter Rückgriff auf Konfigurationsdaten des Feldbusses (1) eingerichtet wird bzw. worden ist.

5. Verfahren nach einem der vorhergehenden Ansprüche, **dadurch gekennzeichnet, dass**
für den oder jeden Feldbus (1) wenigstens zwei Streams (7, 8, 30) eingerichtet werden, wobei über wenigstens einen Stream (7, 8, 30) Datenframes in Richtung des jeweiligen Feldbusses (1) und über wenigstens einen weiteren Stream (7, 8, 30) Datenframes, die aus dem jeweiligen Feldbus (1) stammen, übertragen werden.

6. Verfahren nach einem der vorhergehenden Ansprüche, **dadurch gekennzeichnet, dass**
Daten innerhalb des oder jeden Feldbusses (1) gemäß einem zu dem jeweiligen Feldbus (1) gehörigen Standard übertragen werden.

7. Verfahren nach einem der vorhergehenden Ansprüche, **dadurch gekennzeichnet, dass**
der oder jeder Feldbus (1) über wenigstens zwei Verbindungsknotenpunkte (9, 10, 29) an das AVB- oder TSN-Netzwerk (6) angebunden ist, und jeder Verbindungsknotenpunkt (9, 10, 29) einen Feldbus-Port (11) in Richtung des jeweiligen Feldbusses (1) und einen Stream-Port (12) in Richtung des AVB- oder TSN-Netzwerkes (6) aufweist, und jeder Verbindungsknotenpunkt (9, 10, 29) ausgebildet und eingerichtet sind, um Datenframes (13), die an dem Feldbus-Port (11) ankommen, wenigstens einen Stream-Parameter (18) zuzuweisen und/oder um aus Datenframes (19), die an dem Stream-Port (12) ankommen, wenigstens einen Stream-Parameter (18) zu entfernen.

8. Verfahren nach Anspruch 7,
**dadurch gekennzeichnet, dass**
jeder Verbindungsknotenpunkt (9, 10, 29) des oder jeden Feldbusses (1) einen Endpunkt wenigstens eines zu dem Feldbus (1) gehörigen Streams (7, 8, 30) definiert.

9. Verfahren nach Anspruch 3 und einem der Ansprüche oder 7 oder 8,
**dadurch gekennzeichnet, dass**
eines oder mehrere Geräte (2, 3, 4, 5) des oder jeden Feldbusses (1) mit dem Feldbus-Port (11) des einen Verbindungskotenpunktes (9, 10, 29) und eines oder mehrere weitere Geräte (2, 3, 4, 5) des oder jeden Feldbusses (1) mit dem Feldbus-Port (11) des anderen Verbindungskotenpunktes (9, 10, 29) verbunden sind oder werden.

10. Verfahren nach einem der vorhergehenden Ansprüche, **dadurch gekennzeichnet, dass**
für den oder jeden Feldbus (1) der wenigstens eine Stream (7, 8, 30) automatisiert eingerichtet wird.

11. Verfahren nach einem der vorhergehenden Ansprüche, **dadurch gekennzeichnet, dass**
die Reservierung von Ressourcen für den wenigstens einen Stream (7, 8, 30) unter Verwendung eines Reservierungsprotokolls durchgeführt wird.

12. Verfahren nach einem der vorhergehenden Ansprüche, **dadurch gekennzeichnet, dass**
als Ressourcen für den wenigstens einen Stream (7, 8, 30) Adresstabelleneinträge und/oder Framebuffer und/oder Bandbreite an einem oder mehreren Knotenpunkten (9, 10, 29) des AVB- oder TSN-Netzwerkes (6) reserviert sind und/oder werden.

13. Verfahren nach einem der vorhergehenden Ansprüche, **dadurch gekennzeichnet, dass**
die Übertragung von Datenframes (19) über den wenigstens einen Stream (7, 8, 30) derart ist, dass nach der Übertragung bzw. Weiterleitung jedes Datenframes (19) eine Pause gemacht wird, deren Länge von der Größe des Datenframes (19) und/oder der für den wenigstens einen Stream (7, 8, 30) reservierten Bandbreite abhängt.

14. Verfahren nach einem der vorhergehenden Ansprüche, **dadurch gekennzeichnet, dass**
bei der Übertragung der Datenframes (19) über den wenigstens einen Stream (7, 8, 30) die Einhaltung der Bandbreite durch wenigstens einen Shaper gemäß IEEE 802.1 garantiert wird.

15. Steuerungsverfahren für einen industriellen technischen Prozess oder ein Fahrzeug, bei dem zwischen wenigstens zwei Geräten (2, 3, 4, 5) einer Automatisierungsanlage Daten unter Durchführung des Verfahrens nach einem der vorhergehenden Ansprüche ausgetauscht werden und auf Basis der ausgetauschten Daten eine Steuerung des industriellen technischen Prozesses oder Fahrzeugs erfolgt.

16. Vorrichtung, die zur Durchführung des Verfahrens nach einem der vorhergehenden Ansprüche ausgebildet und eingerichtet ist, umfassend:
- einen oder mehrere AVB- oder TSN-fähige Knotenpunkte (9, 10, 29), welche als Switches und/oder Bridges ausgebildet sind, und
- wenigstens zwei Geräte (2, 3, 4, 5), die Bestandteile einer industriellen Automatisierungsanlage sind und von denen wenigstens eines an einem Feldbus anlegbar ist oder an einem Feldbus (1) liegt.

17. Computerprogramm umfassend Programmcode-Mittel zur Durchführung des Verfahrens nach einem der Ansprüche 1 bis 15.

18. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 15 durchzuführen.

## Claims

1. Method for communicating data in an industrial network, in which
- data are transmitted between at least two devices (2, 3, 4, 5), at least one device of which is on a field bus (1),
- the data are transmitted, at least in sections, via an AVB or TSN network (6) in which at least one stream (7, 8, 30) has been or is configured for the field bus (1), and resources have been and/or are reserved for the at least one stream (7, 8, 30) at one or more nodes (9, 10, 29), which are in the form of switches and/or bridges, of the network (6),
- data frames (13) which come from at least one device on the field bus and/or are intended for at least one device on the field bus are transmitted using the at least one stream (7, 8, 30),
**characterized in that**
- the or each field bus (1) is connected to the AVB or TSN network (6) via at least one connection node (9, 10, 29),
- the at least one connection node (9, 10, 29) has a field bus port (12) in the direction of the respective field bus (1) and a stream port (12) in the direction of the AVB or TSN network (6),
- the at least one connection node (9, 10, 29) is designed and configured to assign at least one stream parameter in the form of a designated stream address (15) and/or a VLAN ID (17) and/or a priority (18) to data frames (13) arriving at the field bus port (11) and/or to remove at least one stream parameter in the form of a designated stream address (15) and/or a VLAN ID (17) and/or a priority (18) from data frames (19) arriving at the stream port (12).

2. Method according to Claim 1,
**characterized in that**
two or more field buses (1), on each of which there is at least one device (2, 3, 4, 5), are provided, and at least one stream (7, 8, 30) assigned to the respective field bus (1) has been or is configured for each field bus (1) in the AVB or TSN network (6), wherein resources have been and/or are reserved for each stream (7, 8, 30) at one or more nodes (9, 10, 29), which are in the form of switches and/or bridges, of the network (6), and data frames (13) which come from at least one device (2, 3, 4, 5) on the respective field bus (1) and/or are intended for at least one device (2, 3, 4, 5) on the respective field bus (1) are transmitted in the AVB or TSN network (6) using the respective at least one stream (7, 8, 30) .

3. Method according to one of the preceding claims, **characterized in that**
at least one stream (7, 8, 30) has been or is set up between two segments (1a, 1b, 1c) of a field bus (1), wherein a plurality of devices (2, 3, 4, 5) are on at least one field bus segment (1a, 1b, 1c).

4. Method according to one of the preceding claims, **characterized in that**
the at least one stream (7, 8, 30) is or has been configured for the or each field bus (1) by resorting to configuration data relating to the field bus (1).

5. Method according to one of the preceding claims, **characterized in that**
at least two streams (7, 8, 30) are configured for the or each field bus (1), wherein data frames are transmitted in the direction of the respective field bus (1) using at least one stream (7, 8, 30) and data frames which come from the respective field bus (1) are transmitted using at least one further stream (7, 8, 30).

6. Method according to one of the preceding claims, **characterized in that**
data within the or each field bus (1) are transmitted according to a standard associated with the respective field bus (1).

7. Method according to one of the preceding claims, **characterized in that**
the or each field bus (1) is connected to the AVB or TSN network (6) via at least two connection nodes (9, 10, 29), and each connection node (9, 10, 29) has a field bus port (11) in the direction of the respective field bus (1) and a stream port (12) in the direction of the AVB or TSN network (6), and each connection node (9, 10, 29) is designed and configured to assign at least one stream parameter (18) to data frames (13) arriving at the field bus port (11) and/or to remove at least one stream parameter (18) from data frames (19) arriving at the stream port (12).

8. Method according to Claim 7,
**characterized in that**
each connection node (9, 10, 29) of the or each field bus (1) defines an end point of at least one stream (7, 8, 30) associated with the field bus (1).

9. Method according to Claim 3 and either of Claims 7 and 8, **characterized in that**
one or more devices (2, 3, 4, 5) of the or each field bus (1) have been or are connected to the field bus port (11) of one connection node (9, 10, 29) and one or more further devices (2, 3, 4, 5) of the or each field bus (1) have been or are connected to the field bus port (11) of the other connection node (9, 10, 29).

10. Method according to one of the preceding claims,
**characterized in that**
the at least one stream (7, 8, 30) is configured in an automated manner for the or each field bus (1).

11. Method according to one of the preceding claims,
**characterized in that**
resources for the at least one stream (7, 8, 30) are reserved using a reservation protocol.

12. Method according to one of the preceding claims,
**characterized in that**
address table entries and/or frame buffers and/or bandwidth have been and/or are reserved as resources for the at least one stream (7, 8, 30) at one or more nodes (9, 10, 29) of the AVB or TSN network (6).

13. Method according to one of the preceding claims,
**characterized in that**
data frames (19) are transmitted using the at least one stream (7, 8, 30) in such a manner that, after each data frame (19) has been transmitted or forwarded, there is a pause, the length of which depends on the size of the data frame (19) and/or the bandwidth reserved for the at least one stream (7, 8, 30).

14. Method according to one of the preceding claims,
**characterized in that**
when transmitting the data frames (19) using the at least one stream (7, 8, 30), the compliance with the bandwidth is guaranteed by means of at least one shaper according to IEEE 802.1.

15. Control method for an industrial technical process or a vehicle, in which data are interchanged between at least two devices (2, 3, 4, 5) of an automation system by carrying out the method according to one of the preceding claims, and the industrial technical process or vehicle is controlled on the basis of the data which have been interchanged.

16. Apparatus which is designed and configured to carry out the method according to one of the preceding claims, comprising:
- one or more AVB-enabled or TSN-enabled nodes (9, 10, 29) which are in the form of switches and/or bridges, and
- at least two devices (2, 3, 4, 5) which are parts of an industrial automation system and at least one of which can be placed on a field bus or is on a field bus (1).

17. Computer program comprising program code means for carrying out the method according to one of Claims 1 to 15.

18. Computer-readable medium comprising instructions which, when executed on at least one computer, cause the at least one computer to carry out the steps of the method according to one of Claims 1 to 15.

## Revendications

1. Procédé de communication de données dans un réseau industriel, dans lequel
- on transmet des données entre au moins deux appareils (2, 3, 4, 5), dont l'un au moins se trouve dans un bus (1) sur site,
- la transmission de données a lieu, au moins par endroit, par un réseau (6) AVB ou TSN, dans lequel il est prévu, pour le bus (1) sur site, au moins un stream (7, 8, 9), des ressources étant réservées, pour le au moins un stream (7, 8, 30), à un ou à plusieurs points (9, 10, 29) nodaux constitués sous la forme de switches et/ou de bridges, du réseau (6),
- on transmet, par le au moins un stream (7, 8, 30), des trames (13) de données, qui proviennent d'au moins un appareil se trouvant sur le bus sur site et/ou qui sont destinées à au moins un appareil se trouvant sur le bus sur site,
**caractérisé en ce que**
- le ou chaque bus (1) sur site est relié au réseau (6) AVB ou TSN par au moins un point (9, 10, 29) nodal de liaison,
- le au moins un point (9, 10, 29) nodal de liaison a un accès (12) de bus sur site en direction du bus (1) sur site respectif et un accès (12) de stream en direction du réseau (6) AVB ou TSN,
- le au moins un point (9, 10, 29) nodal de liaison est constitué et conçu pour attribuer à des trames (13) de données, qui arrivent sur un accès (11) de bus sur site, au moins un paramètre de stream sous la forme d'une adresse (15) de stream désignée et/ou d'une VLAN ID (17) et/ou d'une priorité (18) et/ou pour retirer de trames (19) de données, qui arrivent sur l'accès (12) de stream, au moins un paramètre de stream sous la forme d'une adresse (15) de stream désignée et/ou d'une VLAN ID (17) et/ou d'une priorité (18).

2. Procédé suivant la revendication 1,
**caractérisé en ce qu'**
il est prévu deux ou plusieurs bus (1) sur site sur lesquels se trouve, respectivement, au moins un appareil (2, 3, 4, 5) et, pour chaque bus (1) sur site, au moins un stream (7, 8, 30) associé au bus (1) sur site respectif est aménagé dans le réseau (6) AVB ou TSN, dans lequel, pour chaque stream (7, 8, 30), des ressources sont réservées sur un ou plusieurs points (9, 10, 29) nodaux constitués en switches et/ou en bridges du réseau (6) et on transmet dans le réseau (6) AVB ou TSN, par le au moins un stream (7, 8, 30) respectif, des trames (13) de données qui proviennent d'au moins un appareil (2, 3, 4, 5) se trouvant sur le bus (1) sur site respectif et/ou destinées à au moins un appareil (2, 3, 4, 5) se trouvant sur le bus (1) sur site.

3. Procédé suivant l'une des revendications précédentes,
**caractérisé en ce qu'**
au moins un stream (7, 8, 30) est aménagé entre deux segments (1a, 1b, 1c) d'un bus (1) sur site, plusieurs appareils (2, 3, 4, 5) se trouvant sur au moins un segment (1a, 1b, 1c) de bus sur site.

4. Procédé suivant l'une des revendications précédentes,
**caractérisé en ce que**,
pour le ou chaque bus (1) sur site, le au moins un stream (7, 8, 30) est aménagé en ayant recours à des données de configuration du bus (1) sur site.

5. Procédé suivant l'une des revendications précédentes,
**caractérisé en ce que**,
pour le ou chaque bus (1) sur site, on aménage au moins deux streams (7, 8, 30), dans lequel, par au moins un stream (7, 8, 30), on transmet des trames de données en direction du bus (1) sur site respectif et, par au moins un autre stream (7, 8, 30), on transmet des trames de données qui proviennent du bus (1) sur site respectif.

6. Procédé suivant l'une des revendications précédentes,
**caractérisé en ce que**
l'on transmet des données au sein du ou de chaque bus (1) sur site suivant une norme appartenant au bus (1) sur site respectif.

7. Procédé suivant l'une des revendications précédentes,
**caractérisé en ce que**
le ou chaque bus (1) sur site est relié au réseau (6) AVB ou TSN par au moins deux points (9, 10, 29) nodaux de liaison et chaque point (9, 10, 29) nodal de liaison a un accès (11) de bus sur site en direction du bus (1) sur site respectif et un accès (12) de stream en direction du réseau (6) AVB ou TSN et chaque point (9, 10, 29) nodal de liaison est constitué et conçu pour attribuer au moins un paramètre (18) de stream à des trames (13) de données qui arrivent à l'accès (11) de bus sur site et/ou retirer au moins un paramètre (18) de stream de trame (19) de données qui arrive à l'accès (12) de stream.

8. Procédé suivant la revendication 7,
**caractérisé en ce que**
chaque point (9, 10, 29) nodal de liaison du ou de chaque bus (1) sur site définit un point final d'au moins un stream (7, 8, 30) associé au bus (1) sur site.

9. Procédé suivant la revendication 3 et l'une des revendications 7 ou 8,
**caractérisé en ce qu'**
un ou plusieurs appareils (2, 3, 4, 5) du ou de chaque bus (1) sur site (1) sur site est relié à l'accès (11) de bus sur site de l'un des points (9, 10, 29) nodaux de liaison et l'un ou plusieurs autres appareils (2, 3, 4, 5) du ou de chaque bus (1) sur site est relié à l'accès (11) de bus sur site de l'autre point (9, 10, 29) nodal de liaison.

10. Procédé suivant l'une des revendications précédentes,
**caractérisé en ce que**
l'on conçoit de manière automatisée le au moins un stream (7, 8, 30) pour le ou pour chaque bus (1) sur site.

11. Procédé suivant l'une des revendications précédentes,
**caractérisé en ce que**
l'on effectue la réservation de ressources pour le au moins un stream (7, 8, 30) en utilisant un programme de réservation.

12. Procédé suivant l'une des revendications précédentes,
**caractérisé en ce que**
l'on réserve comme ressources, pour le au moins un stream (7, 8, 30), des entrées de table d'adresse et/ou des tampons de trame et/ou des largeurs de bande en un ou en plusieurs points (9, 10, 29) nodaux du réseau (6) AVB ou TSN.

13. Procédé suivant l'une des revendications précédentes,
**caractérisé en ce que**
la transmission des trames (19) de données par le au moins un stream (7, 8, 30) est telle qu'après la transmission ou l'acheminement de chaque trame (19) de données, on fait une pose dont la longueur dépend de la dimension de la trame (19) de données et/ou de la largeur de bande réservée au au moins un stream (7, 8, 30).

14. Procédé suivant l'une des revendications précédentes,
**caractérisé en ce que**,
lors de la transmission des trames (19) de données par le au moins un stream (7, 8, 30), on garantit le maintien de la largeur de bande par au moins un shaper suivant IEEE 802.1.

15. Procédé de commande d'un processus technique industriel ou d'un véhicule, dans lequel on échange, entre au moins deux appareils (2, 3, 4, 5) d'une installation d'automatisation, des données en effectuant le procédé suivant l'une des revendications précédentes et, sur la base des données échangées, on effectue une commande du processus technique industriel ou du véhicule.

16. Système qui est constitué et conçu pour effectuer le procédé suivant l'une des revendications précédentes, comprenant :
- un ou plusieurs points (9, 10, 29) nodaux convenant à l'AVB ou au TSN qui sont constitués en switches et/ou en bridges,
- au moins deux appareils (2, 3, 4, 5) qui font partie d'une installation d'automatisation industrielle et dont l'un au moins peut être appliqué à un bus sur site ou se trouve sur un bus (1) sur site.

17. Programme d'ordinateur comprenant des moyens de code de programme pour effectuer le procédé suivant l'une des revendications 1 à 15.

18. Support déchiffrable par ordinateur qui comprend des instructions qui, lorsqu'elles sont réalisées sur au moins un ordinateur, font que le au moins ordinateur effectue les stades du procédé suivant l'une des revendications 1 à 15.
